(19) Europäisches Patentamt / European Patent Office / Office européen des brevets

(11) **EP 3 604 436 A1**

(12) **EUROPEAN PATENT APPLICATION**
published in accordance with Art. 153(4) EPC

(43) Date of publication:
**05.02.2020 Bulletin 2020/06**

(21) Application number: **18777937.6**

(22) Date of filing: **12.03.2018**

(51) Int Cl.:
**C08L 53/02** (2006.01)     **C03C 27/12** (2006.01)
**C08K 5/098** (2006.01)

(86) International application number:
**PCT/JP2018/009556**

(87) International publication number:
**WO 2018/180427 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2017 JP 2017065962**

(71) Applicant: **Zeon Corporation**
**Tokyo 100-8246 (JP)**

(72) Inventors:
• **KAMIMURA, Haruki**
  **Tokyo 100-8246 (JP)**
• **KOIDE, Yohei**
  **Tokyo 100-8246 (JP)**
• **KURIHARA, Ryuta**
  **Tokyo 100-8246 (JP)**

(74) Representative: **Maiwald Patent- und Rechtsanwaltsgesellschaft mbH**
**Elisenhof**
**Elisenstraße 3**
**80335 München (DE)**

(54) **RESIN COMPOSITION, AND MOLDING AND PRODUCTION METHOD THEREFOR**

(57) Provided is a resin composition with which pellet blocking resistance can be sufficiently improved and a shaped product having excellent transparency with little clouding can be obtained, and a shaped product having excellent transparency with little clouding and a production method therefor. A resin composition comprises: pellets containing a hydrogenated block copolymer [D] obtained by hydrogenating a block copolymer [C] having a polymer block [A] containing a structural unit derived from an aromatic vinyl compound and a polymer block [B] containing a structural unit derived from a chain conjugated diene compound; and an antiblocking agent, wherein a ratio (wA:wB) between wA and wB is 10:90 to 70:30, and a content of the antiblocking agent per 100 parts by mass of the pellets is 0.001 parts by mass or more and 0.4 parts by mass or less.

**Description**

TECHNICAL FIELD

The present disclosure relates to a resin composition, and a shaped product and a production method therefor.

BACKGROUND

Hydrides of block copolymers (hereafter also referred to as "hydrogenated block copolymers") and hydrogenated block copolymers having an alkoxysilyl group introduced therein are useful in applications that require excellent flexibility and transparency, such as a sealing material of a solar cell, a sealing material of an organic electroluminescent device, and an interlayer of a laminated glass (for example, see PTL 1 to PTL 4).

For applications such as a sealing material of a solar cell, an interlayer of a laminated glass, and a sealing material of an organic electroluminescent device, typically, a hydrogenated block copolymer in a pellet state is processed in a sheet shape by extrusion, calendaring, or the like, and the sheet-shaped hydrogenated block copolymer is placed on a substrate.

However, blocking may occur as a result of the pellets of the hydrogenated block copolymer being consolidated in a pellet storage container, in a pneumatic transportation pipe from the pellet storage container to a forming machine, in a hopper of the forming machine, or the like, which makes it impossible to continue sheet shaping. Particularly when sealability at a relatively low temperature of about 100 °C is required as in the case of a sealing material of an organic electroluminescent device, a hydrogenated block copolymer having a low softening temperature needs to be used. This further facilitates pellet blocking.

Thus, there is a need for a technique of improving pellet blocking resistance in the case of using pellets of a hydrogenated block copolymer having high flexibility.

To improve pellet blocking resistance, external addition of an antiblocking agent such as polyorganosiloxane, metallic soap, a resin polymer powder, or a bisamide compound to a hydrogenated block copolymer has been conventionally performed (for example, see PTL 5 to PTL 9).

CITATION LIST

Patent Literatures

PTL 1: WO 2011/096389 A1

PTL 2: WO 2013/176258 A1

PTL 3: WO 2014/091941 A1

PTL 4: WO 2016/104740 A1

PTL 5: JP H5-98051 A

PTL 6: JP 2007-308525 A

PTL 7: JP 2014-034625 A

PTL 8: JP 2015-78090 A

PTL 9: JP 2015-151519 A

SUMMARY

(Technical Problem)

When shaping a hydrogenated block copolymer, it is necessary to not only sufficiently improve the pellet blocking resistance but also obtain a shaped product having excellent transparency with little clouding. The conventional techniques have room for improvement in sufficiently improving the pellet blocking resistance and obtaining a shaped product having excellent transparency with little clouding.

It could therefore be helpful to provide a resin composition with which pellet blocking resistance can be sufficiently improved and a shaped product having excellent transparency with little clouding can be obtained, and a shaped product having excellent transparency with little clouding and a production method therefor.

(Solution to Problem)

Through extensive studies to solve the problems, the inventors discovered that, by externally adding 0.001 parts by mass or more and 0.4 parts by mass or less of a specific antiblocking agent per 100 parts by mass of pellets containing a specific hydrogenated block copolymer [D] as a main component, the pellet blocking resistance can be sufficiently improved, and a shaped product having excellent transparency with little clouding can be obtained.

To advantageously solve the problems stated above, a resin composition according to the present disclosure is a resin composition comprising: pellets containing a hydrogenated block copolymer [D] as a main component, the hydrogenated block copolymer [D] being obtained by hydrogenating a block copolymer [C] having two or more polymer blocks [A] containing a structural unit derived from an aromatic vinyl compound as a main component and one or more polymer blocks [B] containing a structural unit derived from a chain conjugated diene compound as a main component; and an antiblocking agent formed from a metal salt of a fatty acid with a carbon number of 10 to 30, wherein a ratio wA:wB between wA and wB is 10:90 to 70:30, where wA is a mass fraction of a total amount of the polymer blocks [A] to the whole block copolymer [C] and wB is a mass fraction of a total amount of the polymer blocks [B] to the whole block copolymer [C], and a content of the antiblocking agent per 100 parts by mass of the pellets is 0.001 parts by mass or more and 0.4 parts by mass or less. As a result of the content of the specific antiblocking agent being 0.001 parts by mass to 0.4 parts by mass per 100 parts by mass of the pellets containing the specific hydrogenated block copolymer [D] as a main component, the pellet blocking resistance can be sufficiently improved, and a shaped product having excellent transparency with little clouding can be obtained.

In the present disclosure, the "polymer block [A] containing a structural unit derived from an aromatic vinyl compound as a main component" denotes a "polymer block [A] containing 90 mass% or more of a structural unit derived from an aromatic vinyl compound". The "polymer block [B] containing a structural unit derived from a chain conjugated diene compound as a main component" denotes a "polymer block [B] containing 70 mass% or more of a structural unit derived from a chain conjugated diene compound". The "pellets containing a hydrogenated block copolymer [D] as a main component" denotes "pellets containing 70 mass% or more of a hydrogenated block copolymer [D]".

Preferably, in the resin composition according to the present disclosure, in the hydrogenated block copolymer [D], 90 % or more of an unsaturated carbon-carbon bond in a main chain and a side chain is hydrogenated, and 90 % or more of an unsaturated carbon-carbon bond in an aromatic ring is hydrogenated. As a result of the hydrogenated block copolymer [D] having a structure in which 90 % or more of an unsaturated carbon-carbon bond in a main chain and a side chain is hydrogenated and 90 % or more of an unsaturated carbon-carbon bond in an aromatic ring is hydrogenated, weather resistance can be imparted.

Preferably, in the resin composition according to the present disclosure, the fatty acid with a carbon number of 10 or more and 30 or less is at least one selected from the group consisting of stearic acid, lauric acid, myristic acid, ricinoleic acid, behenic acid, montanic acid, and 12-hydroxystearic acid. As a result of the fatty acid with a carbon number of 10 or more and 30 or less being at least one selected from the group consisting of stearic acid, lauric acid, myristic acid, ricinoleic acid, behenic acid, montanic acid, and 12-hydroxystearic acid, the pellet blocking resistance can be sufficiently improved.

Preferably, in the resin composition according to the present disclosure, the metal salt of the fatty acid with a carbon number of 10 or more and 30 or less is at least one selected from the group consisting of lithium stearate, sodium stearate, potassium stearate, magnesium stearate, calcium stearate, aluminum stearate, zinc stearate, barium stearate, calcium laurate, zinc laurate, barium laurate, zinc myristate, calcium ricinoleate, zinc ricinoleate, barium ricinoleate, zinc behenate, sodium montanate, magnesium 12-hydroxystearate, calcium 12-hydroxystearate, and zinc 12-hydroxystearate. As a result of the metal salt of the fatty acid with a carbon number of 10 or more and 30 or less being at least one selected from the group consisting of lithium stearate, sodium stearate, potassium stearate, magnesium stearate, calcium stearate, aluminum stearate, zinc stearate, barium stearate, calcium laurate, zinc laurate, barium laurate, zinc myristate, calcium ricinoleate, zinc ricinoleate, barium ricinoleate, zinc behenate, sodium montanate, magnesium 12-hydroxystearate, calcium 12-hydroxystearate, and zinc 12-hydroxystearate, the pellet blocking resistance can be improved more reliably.

To advantageously solve the problems stated above, a shaped product according to the present disclosure is a shaped product formed from the above-described resin composition, wherein a haze of the shaped product is 1.0 % or less. As a result of the shaped product being formed from the above-described resin composition and having a haze of 1.0 % or less, the shaped product has excellent transparency with little clouding, and can be advantageously used in various applications. The haze of the shaped product can be measured by the measurement method described in the EXAMPLES section (i.e. measuring a laminate obtained by interposing the shaped product formed from the resin composition between two glass plates and integrating them).

A production method for a shaped product according to the present disclosure is a shaped product production method for producing the above-described shaped product.

(Advantageous Effect)

It is thus possible to provide a resin composition with which pellet blocking resistance can be sufficiently improved and a shaped product having excellent transparency with little clouding can be obtained.

It is also possible to provide a shaped product having excellent transparency with little clouding and a production method therefor.

DETAILED DESCRIPTION

One of the disclosed embodiments will be described in detail below.

The following will describe a resin composition and a shaped product in detail in separate sections.

(Resin composition)

A resin composition according to the present disclosure is a composition obtained by externally adding a predetermined amount of a predetermined antiblocking agent to pellets containing a predetermined hydrogenated block copolymer [D] as a main component.

The content of the antiblocking agent in the resin composition per 100 parts by mass of the pellets is 0.001 parts by mass or more and 0.4 parts by mass or less, and is preferably 0.002 parts by mass or more, more preferably 0.003 parts by mass or more, further preferably 0.004 parts by mass or more, and particularly preferably 0.005 parts by mass or more, and is preferably 0.3 parts by mass or less, more preferably 0.15 parts by mass or less, further preferably 0.09 parts by mass or less, and particularly preferably 0.04 parts by mass or less. If the content of the antiblocking agent per 100 parts by mass of the pellets is 0.001 parts by mass or more, sufficient pellet blocking prevention effect can be achieved. If the content of the antiblocking agent per 100 parts by mass of the pellets is 0.4 parts by mass or less, classification between the pellets and the antiblocking agent can be prevented, thus preventing defects such as transparent streaks and unevenness of a shaped product obtained by melt shaping the resin composition. Hence, a shaped product having excellent transparency with little clouding can be obtained.

The method of externally adding the antiblocking agent to the pellets is not limited. Examples include (i) a method of attaching the antiblocking agent to the pellets using a mixer such as a tumbler mixer, a ribbon blender, or a Henschel mixer; and (ii) a method of bringing the pellets into contact with a dispersion liquid obtained by dispersing the antiblocking agent in water to attach the antiblocking agent to the pellets.

<Pellets>

The pellets contain the hydrogenated block copolymer [D] as a main component, and may optionally contain various additives typically contained in resin.

The shape of the pellets is not limited as long as the functions of the resin composition including the pellets are not hindered. For example, the shape of the pellets is approximately elliptic cylindrical, approximately spherical, or approximately ellipsoidal, without being limited thereto.

The term "approximately elliptic cylindrical" includes not only a right elliptic cylinder and an oblique elliptic cylinder, but also, for example, the case where the shape of the whole pellet can be approximated to a right elliptic cylinder or an oblique elliptic cylinder although there are fine irregularities at the surface. The term "approximately elliptic cylindrical" also includes a shape in which the major axis and the minor axis of the ellipse are substantially equal and that can be approximated to an approximately cylindrical shape.

The term "approximately spherical" includes not only a perfect sphere but also the case where the sphere is not perfect, such as the case where the shape of the whole pellet can be approximated to a perfect sphere although there are fine irregularities at the surface.

The term "approximately ellipsoidal" includes an oblate ellipsoid, a prolate ellipsoid, an ellipsoid with different axes in three-dimensional directions, and the like that are not a perfect sphere. That is, the term "approximately ellipsoidal" includes all shapes that can be approximated to an ellipsoid. The term "approximately ellipsoidal" also includes the case where the shape of the whole pellet can be approximated to an ellipsoid although there are fine irregularities at the surface.

Pellets whose surfaces are curved, such as approximately elliptic cylindrical, approximately spherical, or approximately ellipsoidal, tend to have enhanced blocking resistance.

In the case where the pellet shape is approximately elliptic cylindrical, each of the length of the elliptic cylinder, the major axis of the ellipse, and the minor axis of the ellipse is preferably 8 mm or less, more preferably 7 mm or less, and particularly preferably 6 mm or less.

In the case where the pellet shape is approximately elliptic cylindrical, if each of the length of the elliptic cylinder, the major axis of the ellipse, and the minor axis of the ellipse of the approximately elliptic cylindrical pellet is 8 mm or less, the pellet blocking resistance can be improved, and shape defects of unmelted material or the like in melt shaping can be prevented. If at least one of the length of the elliptic cylinder, the major axis of the ellipse, and the minor axis of the ellipse of the elliptic cylindrical pellet is excessively short, e.g. 1.4 mm or less, the pellet blocking resistance may decrease, and blocking defects tend to occur when using the pellets during storage, transportation, or shaping.

Moreover, in the case where the pellet shape is approximately elliptic cylindrical, a L/D value represented by the following Formula 1 is preferably 0.7 or more, more preferably 0.8 or more, and particularly preferably 1.0 or more, and is preferably 3.0 or less, more preferably 2.5 or less, and particularly preferably 2.0 or less.

$$L/D \text{ value} = (\text{length of elliptic cylinder})/[(\text{major axis of ellipse} + \text{minor axis of ellipse})/2] \quad \dots \text{ Formula 1}.$$

In the case where the pellet shape is approximately spherical, the diameter of the approximately spherical pellet is preferably 2.3 mm or more, more preferably 2.4 mm or more, and particularly preferably 2.6 mm or more, and is preferably 4.5 mm or less, more preferably 4.3 mm or less, and particularly preferably 4.1 mm or less.

If the diameter of the approximately spherical pellet is 2.3 mm or more, the pellet blocking resistance can be improved, If the diameter of the approximately spherical pellet is 4.5 mm or less, unevenness in the sheet shaping speed in the forming machine can be prevented, and entrance of unmelted resin into the shaped product can be prevented, with it being possible to prevent poor appearance.

In the case where the pellet shape is approximately ellipsoidal, the major axis of the approximately ellipsoidal pellet is preferably 2.3 mm or more, more preferably 2.4 mm or more, particularly preferably 2.6 mm or more, and most preferably 4.2 mm or more, and is preferably 5.4 mm or less, more preferably 5.2 mm or less, particularly preferably 5.0 mm or less, and most preferably 4.4 mm or less. Moreover, the minor axis of the approximately ellipsoidal pellet is preferably 1.5 mm or more, more preferably 1.6 mm or more, further preferably 1.7 mm or more, and particularly preferably 1.9 mm or more, and is preferably 4.5 mm or less, more preferably 4.3 mm or less, and particularly preferably 4.1 mm or less.

If the major axis of the approximately ellipsoidal pellet is 2.3 mm or more and the minor axis of the approximately ellipsoidal pellet is 1.5 mm or more, the pellet blocking resistance can be improved. If the major axis of the approximately ellipsoidal pellet is 5.4 mm or less and the minor axis of the approximately ellipsoidal pellet is 4.5 mm or less, unevenness in the sheet shaping speed in the forming machine can be prevented, and entrance of unmelted resin into the shaped product can be prevented, with it being possible to prevent poor appearance.

The method of producing approximately spherical or approximately ellipsoidal pellets is not limited, and may be a publicly known technique. For example, a method of producing the pellets from the resin melt-extruded from a die may be used.

Examples of a pelletizer for producing the pellets from the resin melt-extruded from a die include underwater cut type, hot cut type, mist cut type, and watering cut type. In the case where the softening temperature of the hydrogenated block copolymer [D] is low, the pellets are preferably produced using a pelletizer of underwater cut type or watering cut type.

The method of producing approximately elliptic cylindrical pellets is not limited, and may be a publicly known technique. For example, a method of solidifying, by air cooling or water cooling, the resin melt-extruded from a die in a strand shape and then cutting the resin to produce approximately elliptic cylindrical pellets (cold cut type) may be used. Examples of a pelletizer for cutting the resin melt-extruded from a die in a strand shape include a pelletizer of side cut type and a pelletizer using a drum cutter.

<<Hydrogenated block copolymer [D]>>

The specific hydrogenated block copolymer [D] used in the present disclosure is a polymer obtained by hydrogenating a block copolymer [C] as a precursor.

In the hydrogenated block copolymer [D], preferably 90 % or more, more preferably 97 % or more, further preferably 99 % or more, and particularly preferably 100 % of an unsaturated carbon-carbon bond of a main chain and a side chain is hydrogenated, and preferably 90 % or more, more preferably 97 % or more, further preferably 99 % or more, and particularly preferably 100 % of an unsaturated carbon-carbon bond of an aromatic ring is hydrogenated.

Herein, "hydrogenation of an unsaturated carbon-carbon bond in a main chain and a side chain" denotes "hydrogenation of a double bond derived from a conjugated diene in the block copolymer [C]", and "hydrogenation of an unsaturated carbon-carbon bond in an aromatic ring" denotes "hydrogenation of a double bond derived from an aromatic ring in the block copolymer [C]".

When the hydrogenation rate indicating the degree of hydrogenation is higher, the light resistance, heat resistance, and transparency of the shaped product are better.

The hydrogenation rate can be measured by subjecting the block copolymer [C] and the hydrogenated block copolymer [D] to 1H-NMR measurement.

The hydrogenation method, the reaction form, etc. of the unsaturated carbon-carbon bond are not limited, and may conform to a publicly known method. From the viewpoint of improving the hydrogenation rate, a hydrogenation method with little polymer chain break reaction is preferable. Examples of the hydrogenation method with little polymer chain break reaction include the methods described in WO 2011/096389 A1, WO 2012/043708 A1, and the like.

After the hydrogenation reaction end, a hydrogenate catalyst and/or polymerization catalyst is removed from the reaction solution. The hydrogenated block copolymer [D] can then be collected from the obtained solution. The collected hydrogenated block copolymer [D] can be made into a pellet shape, and subjected to subsequent addition of additives and optional introduction reaction of an alkoxysilyl group, an acid anhydride group, etc.

From the viewpoint of the heat resistance and the mechanical strength of the shaped product, the molecular weight of the hydrogenated block copolymer [D] is preferably 40,000 or more, more preferably 50,000 or more, particularly preferably 60,000 or more, and most preferably 90,000 or more, and is preferably 200,000 or less, more preferably 150,000 or less, and particularly preferably 100,000 or less, in weight-average molecular weight (Mw) in terms of polystyrene measured by gel permeation chromatography (GPC) with THF as a solvent.

From the viewpoint of the heat resistance and the mechanical strength of the shaped product, the molecular weight distribution (Mw/Mn) of the hydrogenated block copolymer [D] is preferably 3 or less, more preferably 2 or less, particularly preferably 1.5 or less, and most preferably 1.1 or less.

- Block copolymer [C] -

The block copolymer [C] is a polymer having two or more polymer blocks [A] containing a structural unit derived from an aromatic vinyl compound as a main component and one or more polymer blocks [B] containing a structural unit derived from a chain conjugated diene compound as a main component.

The number of polymer blocks [A] in the block copolymer [C] is preferably 4 or less, more preferably 3 or less, and particularly preferably 2.

The number of polymer blocks [B] in the block copolymer [C] is preferably 3 or less, more preferably 2 or less, and particularly preferably 1.

By limiting the number of polymer blocks [A] and the number of polymer blocks [B] in the block copolymer [C] to the foregoing ranges, indistinct phase separation between a hydrogenated copolymer block derived from the polymer block (A) (hereafter also referred to as "hydrogenated polymer block [Ah]") and a hydrogenated polymer block derived from the polymer block (B) (hereafter also referred to as "hydrogenated polymer block [Bh]") in the hydrogenated block copolymer [D] obtained by hydrogenating the block copolymer [C] can be suppressed, and a decrease in the glass transition temperature on the high temperature side based on the hydrogenated polymer block [Ah] (hereafter also referred to as "Tg2") can be prevented, with it being possible to prevent a decrease in the heat resistance of the obtained shaped product.

The glass-transition temperature Tg2 on the high temperature side of the hydrogenated block copolymer [D] is not limited, but is preferably 80 °C to 140 °C and more preferably 100 °C to 110 °C.

The block form of the block copolymer [C] is not limited and may be a chain-type block or a radial-type block, but a chain-type block is preferable from the viewpoint of mechanical strength. A particularly preferable form of the block copolymer [C] is a triblock copolymer in which polymer blocks [A] bind to both ends of a polymer block [B] ([A]-[B]-[A]), or a pentablock copolymer in which polymer blocks [B] bind to both ends of a polymer block [A] and further polymer blocks [A] respectively bind to the other ends of the polymer blocks [B] ([A]-[B]-[A]-[B]-[A]).

When the mass fraction of the total amount of the polymer blocks (A) to the block copolymer [C] is denoted by wA and the mass fraction of the total amount of the polymer blocks (B) to the block copolymer [C] is denoted by wB, the ratio wA:wB between wA and wB is 10:90 to 70:30, preferably 12:88 to 50:50, more preferably 14:86 to 40:60, further preferably 14:86 to 35:65, particularly preferably 14:86 to 30:70, and most preferably 15:85 to 25:75.

The ratio between the mass fraction of the total amount of the aromatic vinyl compound-derived structural units in the block copolymer [C] to the block copolymer [C] and the mass fraction of the total amount of the chain conjugated diene compound-derived structural units in the block copolymer [C] to the block copolymer [C] is preferably 10:90 to 70:30, more preferably 12:88 to 50:50, further preferably 14:86 to 40:60, even more preferably 14:86 to 35:65, particularly preferably 14:86 to 30:70, and most preferably 15:85 to 25:75.

If the mass fraction of wA is 70 % or less, a decrease in the flexibility of the obtained shaped product can be prevented, so that, when the obtained shaped product is used in a sealing material of a solar cell, an interlayer of a laminated glass, a sealing material of an organic electroluminescent device, or the like, the adherend can be kept from breaking and becoming unusable. If the mass fraction of wA is 10 % or more, the hydrogenated block copolymer [D] obtained by hydrogenating the block copolymer [C] can be kept from becoming excessively soft and susceptible to blocking.

From the viewpoint of the heat resistance and the mechanical strength of the shaped product, the molecular weight of the block copolymer [C] is preferably 40,000 or more, more preferably 50,000 or more, particularly preferably 60,000 or more, and most preferably 80,000 or more, and is preferably 200,000 or less, more preferably 150,000 or less, particularly preferably 120,000 or less, and most preferably 100,000 or less, in weight-average molecular weight (Mw) in terms of polystyrene measured by GPC with tetrahydrofuran (THF) as a solvent.

From the viewpoint of the heat resistance and the mechanical strength of the shaped product, the molecular weight distribution (Mw/Mn) of the block copolymer [C] is preferably 3 or less, more preferably 2 or less, particularly preferably 1.5 or less, and most preferably 1.1 or less.

The production method for the block copolymer [C] is not limited, and may be a publicly known method. For example, the block copolymer [C] can be produced by: a method by which a monomer mixture (a) containing an aromatic vinyl compound as a main component and a monomer mixture (b) containing a chain conjugated diene-based compound are alternately polymerized by a process such as living anion polymerization; and a method by which the monomer mixture (a) containing aromatic vinyl compound as a main component and the monomer mixture (b) containing a chain conjugated diene-based compound as a main component are sequentially polymerized, and then the ends of the polymer blocks [A] or [B], preferably the ends of the polymer blocks [B], are coupled with each other by a coupling agent.

Herein, the "monomer mixture (a) containing an aromatic vinyl compound as a main component" denotes a monomer mixture (a) containing 90 mass% or more, preferably 95 mass% or more, and more preferably 99 mass% or more of an aromatic vinyl compound, and the "monomer mixture (b) containing a chain conjugated diene-based compound as a main component" denotes a monomer mixture (b) containing 70 mass% or more, preferably 80 mass% or more, and more preferably 90 mass% or more of a chain conjugated diene compound.

-- Polymer block [A] --

The polymer block [A] is a polymer block having a structural unit [a] derived from an aromatic vinyl compound as a main component. The content of the structural unit [a] in the polymer block [A] is 90 mass% or more, preferably 95 mass% or more, and more preferably 99 mass% or more.

If the content of the structural unit [a] in the polymer block [A] is 90 mass% or more, a decrease in the heat resistance of the obtained shaped product can be prevented.

The polymer block [A] may contain components other than the structural unit [a]. Examples of the other components include a structural unit [b] derived from a chain conjugated diene and/or a structural unit [j] derived from other vinyl compound described later. The total content of the structural unit [b] derived from a chain conjugated diene and the structural unit [j] derived from other vinyl compound in the polymer block [A] is preferably 10 mass% or less, more preferably 5 mass% or less, and particularly preferably 1 mass% or less.

In the case where the polymer block [A] contains the structural unit [b] and/or the structural unit [j] other than the structural unit [a], typically, the polymer block [A] preferably has a part in which the structural units [a], [b], and [j] are repeated irregularly.

If the total content of the structural unit [b] and the structural unit [j] in the polymer block [A] is 10 mass% or less, a decrease in the heat resistance of the obtained shaped product can be prevented.

In the case where the block copolymer [C] includes a plurality of polymer blocks [A], the polymer blocks [A] may be the same as or different from each other.

[Aromatic vinyl compound]

Examples of the aromatic vinyl compound include styrene; styrenes having an alkyl group with a carbon number of 1 to 6 as a substituent, such as $\alpha$-methylstyrene, 2-methylstyrene, 3-methylstyrene, 4-methylstyrene, 2,4-diisopropylstyrene, 2,4-dimethylstyrene, 4-t-butylstyrene, and 5-t-butyl-2-methylstyrene; styrenes having an alkoxy group with a carbon number of 1 to 6 as a substituent, such as 4-methoxystyrene; styrenes having an aryl group as a substituent, such as 4-phenylstyrene; and vinylnaphthalenes such as 1-vinylnaphthalene and 2-vinylnaphthalene.

Of these, aromatic vinyl compounds containing no polar group, such as styrene and styrenes having an alkyl group with a carbon number of 1 to 6 as a substituent, are preferable from the viewpoint of low hygroscopicity, and styrene is more preferable from the viewpoint of industrial availability.

[Other vinyl compounds]

Examples of other vinyl compounds include vinyl compounds other than an aromatic vinyl compound and a chain conjugated diene compound, such as a chain vinyl compound, a cyclic vinyl compound, a cyclic diene compound, an unsaturated cyclic acid anhydride, and an unsaturated imide compound. These compounds may have a substituent such as a nitrile group, an alkoxycarbonyl group, a hydroxycarbonyl group, or a halogen atom. Of these, compounds containing no polar group such as: chain vinyl compounds (chain olefins) with a carbon number of 2 to 20 such as ethylene, propylene, 1-butene, 1-pentene, 1-hexene, 1-heptene, 1-octene, 1-nonene, 1-decene, 1-dodecene, 1-eicosen, 4-methyl-1-pentene, and 4,6-dimethyl-1-heptene; cyclic vinyl compounds (cyclic olefins) with a carbon number of 5 to 20 such as vinylcyclohexane and norbornene; and cyclic diene compounds such as 1,3-cyclohexadiene and norbornadiene are preferable from the viewpoint of low hygroscopicity.

-- Polymer block [B] --

The polymer block [B] is a polymer block having a structural unit [b] derived from a chain conjugated diene compound as a main component. The content of the structural unit [b] in the polymer block [B] is 70 mass% or more, preferably 80 mass% or more, and more preferably 90 mass% or more.
If the content of the structural unit [b] in the polymer block [B] is 70 mass% or more, the obtained shaped product has flexibility.
The polymer block [B] may contain components other than the structural unit [b]. Examples of the other components include the above-described structural unit [a] derived from an aromatic vinyl compound and/or the above-described structural unit [j] derived from other vinyl compound. The total content of the structural unit [a] derived from an aromatic vinyl compound and the structural unit [j] derived from other vinyl compound in the polymer block [B] is 30 mass% or less, preferably 20 mass% or less, and more preferably 10 mass% or less.
In the case where the polymer block [B] contains the structural unit [a] and/or the structural unit [j] other than the structural unit [b], typically, the polymer block [B] preferably has a part in which the structural units [a], [b], and [j] are repeated irregularly.
If the total content of the structural unit [a] and the structural unit [j] in the polymer block [B] is 30 mass% or less, a decrease in the flexibility of the obtained shaped product can be prevented.
In the case where the block copolymer [C] includes a plurality of polymer blocks [B], the polymer blocks [B] may be the same as or different from each other.
Examples of the chain conjugated diene-based compound include 1,3-butadiene, isoprene, 2,3-dimethyl-1,3-butadiene, and 1,3-pentadiene. Of these, chain conjugated diene-based compounds containing no polar group are preferable from the viewpoint of low hygroscopicity, and 1,3-butadiene and isoprene are more preferable from the viewpoint of industrial availability.
In the polymer block [B], a part of the structural unit [b] derived from a chain conjugated diene compound may have a structural unit polymerized by 1,2-bond and/or 3,4-bond (1,2- and 3,4-addition polymerization-derived structural unit), and the remaining part of the structural unit [b] derived from a chain conjugated diene compound may have a structural unit polymerized by 1,4-bond (1,4-addition polymerization-derived structural unit). The proportion of the structural unit derived from a chain conjugated diene compound polymerized by 1,2-bond and/or 3,4-bond to the whole structural unit [b] derived from a chain conjugated diene compound in the polymer block [B] is preferably 0 mass% or more, more preferably 4 mass% or more, further preferably 5 mass% or more, particularly preferably 25 mass% or more, and most preferably 50 mass% or more, and is preferably 75 mass% or less, more preferably 65 mass% or less, and particularly preferably 55 mass% or less. By limiting the content proportion of the structural unit derived from a chain conjugated diene compound polymerized by 1,2-bond and/or 3,4-bond to the foregoing range, the glass-transition temperature on the low temperature side derived from a soft segment of the hydrogenated block copolymer [D] (hereafter also referred to as "Tg1") can be controlled to -50 °C or more and 20 °C or less. As a result of the hydrogenated block copolymer [D] whose Tg1 is controlled to -50 °C or more and 20 °C or less and preferably to 20 °C or more and -10 °C or less being used in an interlayer of a laminated glass as an example, glass scattering prevention performance in a cold condition of about -20 °C can be imparted, and the coincidence effect of the laminated glass can be reduced to impart sound insulation performance to the laminated glass.
The polymer block [B] containing the structural unit derived from a chain conjugated diene compound polymerized by 1,2-bond and/or 3,4-bond can be obtained by polymerizing a chain conjugated diene compound and optionally an aromatic vinyl compound and other vinyl compounds in the presence of a specific compound having an electron-donating atom as a randomization agent. The content of the structural unit derived from a chain conjugated diene compound polymerized by 1,2-bond and/or 3,4-bond can be controlled by the additive amount of the randomization agent.
Examples of the compound having an electron-donating atom (for example, oxygen (O), nitrogen (N)) include an ether compound, a tertiary amine compound, and a phosphine compound. Of these, an ether compound is preferable from the viewpoint that the molecular weight distribution of the random copolymer block can be reduced and its hydrogenation reaction is hardly inhibited.

Specific examples of the compound having an electron-donating atom include diethyl ether, diisopropyl ether, dibutyl ether, tetrahydrofuran, ethylene glycol dimethyl ether, ethylene glycol diethyl ether, ethylene glycol diisopropyl ether, ethylene glycol dibutyl ether, ethylene glycol methyl phenyl ether, propylene glycol dimethyl ether, propylene glycol diethyl ether, propylene glycol diisopropyl ether, propylene glycol dibutyl ether, di(2-tetrahydrofuryl) methane, diethylene glycol dibutyl ether, dipropylene glycol dibutyl ether, and tetramethyl ethylene diamine. The content of these compounds having an electron-donating atom per 100 parts by mass of the chain conjugated diene compound is preferably 0.001 parts by mass or more and more preferably 0.01 parts by mass or more, and is preferably 10 parts by mass or less and more preferably 3 parts by mass or less.

<<Additives>>

Examples of additives contained in the pellets include a tackifier, an ultraviolet absorber, an antioxidant, and a light stabilizer. Any one of such additives may be used individually, or any two or more of such additives may be used in combination.

The method of adding the additives to the hydrogenated block copolymer [D] may be a publicly known method typically used as a resin composition production method. For example, the pellets containing the additives can be produced by uniformly mixing a mass of the hydrogenated block copolymer [D] and the additives and then melt-mixing them and extruding them into pellets by a continuous melt kneader such as a twin-screw extruder.

-- Tackifier --

By blending the tackifier, tackiness can be imparted.

As the tackifier, a hydrocarbon-based polymer with a low molecular weight (number-average molecular weight (Mn) of 300 or more and 5,000 or less) is preferable. Specific examples include low-molecular weight substances such as polyisobutylene, polybutene, poly-4-methylpentene, poly-1-octene, and ethylene-$\alpha$-olefin copolymer and hydrides thereof; and low-molecular weight substances such as polyisoprene and polyisoprene-butadiene copolymer and hydrides thereof. Of these, low-molecular weight polyisobutylene hydride and low-molecular weight polyisoprene hydride are preferable from the viewpoint of maintaining transparency and light resistance and having excellent tackifying effect.

By limiting the blending amount of the tackifier to 20 parts by mass or less per 100 parts by mass of the hydrogenated block copolymer [D], blocking of the pellets containing the hydrogenated block copolymer [D] as a main component can be prevented.

-- Ultraviolet absorber --

By blending the ultraviolet absorber, ultraviolet rays can be blocked. Specific examples of the ultraviolet absorber include an oxybenzophenone-based compound, a benzotriazole-based compound, a salicylate ester-based compound, a benzophenone-based compound, and a triazine-based compound.

The blending amount of the ultraviolet absorber per 100 parts by mass of the hydrogenated block copolymer [D] is preferably 5 parts by mass or less, more preferably 3 parts by mass or less, and particularly preferably 1.5 parts by mass or less.

- Antioxidant -

By blending the antioxidant, processability and the like can be enhanced.

Specific examples of the antioxidant include a phosphorus-based antioxidant, a phenol-based antioxidant, and a sulfur-based antioxidant.

The blending amount of the antioxidant per 100 parts by mass of the hydrogenated block copolymer [D] is preferably 5 parts by mass or less, more preferably 3 parts by mass or less, and particularly preferably 1.5 parts by mass or less.

-- Light stabilizer --

By blending the light stabilizer, durability can be enhanced.

Specific examples of the light stabilizer include a hindered amine-based light stabilizer.

The blending amount of the light stabilizer per 100 parts by mass of the hydrogenated block copolymer [D] is preferably 5 parts by mass or less, more preferably 3 parts by mass or less, and particularly preferably 1.5 parts by mass or less.

<Antiblocking agent>

The antiblocking agent is used to prevent blocking of the pellets containing the hydrogenated block copolymer [D] as a main component.

The antiblocking agent is formed from a metal salt of a fatty acid, and the carbon number of each fatty acid forming the metal salt needs to be 10 to 30. That is, in the case where the metal salt is a salt of two or more fatty acids and a di- or more valent metal, the carbon number of each fatty acid needs to be 10 to 30.

Examples of fatty acids with a carbon number of 10 to 30 include stearic acid, lauric acid, myristic acid, ricinoleic acid, behenic acid, montanic acid, and 12-hydroxystearic acid. Of these, stearic acid is preferable from the viewpoint of the transparency of the shaped product.

Examples of metal salts include lithium salt, sodium salt, potassium salt, magnesium salt, calcium salt, aluminum salt, zinc salt, and barium salt. Of these, zinc salt, aluminum salt, and calcium salt are preferable from the viewpoint of the transparency of the shaped product.

Specific examples of the antiblocking agent include lithium stearate, sodium stearate, potassium stearate, magnesium stearate, calcium stearate, aluminum stearate, zinc stearate, barium stearate, calcium laurate, zinc laurate, barium laurate, zinc myristate, calcium ricinoleate, zinc ricinoleate, barium ricinoleate, zinc behenate, sodium montanate, magnesium 12-hydroxystearate, calcium 12-hydroxystearate, and zinc 12-hydroxystearate. Of these, zinc stearate, aluminum stearate, and calcium stearate are preferable from the viewpoint of obtaining a shaped product having excellent transparency.

The shape of the antiblocking agent is not limited, and may be, for example, powdery.

In the case where the shape of the antiblocking agent is powdery, the particle diameter of the powder is preferably 0.1 $\mu$m or more, more preferably 0.3 $\mu$m or more, and particularly preferably 0.6 $\mu$m or more, and is preferably 300 $\mu$M or less, more preferably 200 $\mu$m or less, and particularly preferably 100 $\mu$m or less. If the particle diameter of the powder of the antiblocking agent is in a range of 0.1 $\mu$m or more and 300 $\mu$m or less, in the case where the antiblocking agent is attached to the outside of the pellets containing the hydrogenated block copolymer [D] as a main component, pellet blocking can be prevented more reliably.

The term "particle diameter" herein denotes a volume-average median diameter.

The particle diameter of the antiblocking agent can be calculated, for example, by measuring and analyzing a solvent in which the antiblocking agent is dispersed using a laser diffraction particle size measurement device.

(Shaped product and production method therefor)

A shaped product is produced by shaping the resin composition according to the present disclosure, and is, for example, an interlayer formed by a resin sheet.

A production method for the shaped product is, for example, shaping in a molten state (melt shaping). Specifically, injection molding, blow molding, injection blow molding, inflation molding, extrusion, and the like may be used, without being limited thereto.

The shaped product produced by shaping the resin composition according to the present disclosure contains the predetermined antiblocking agent in the predetermined proportion. Therefore, excellent transparency of the shaped product formed from the specific hydrogenated block copolymer is not impaired.

The shaped product produced by shaping the resin composition according to the present disclosure has excellent flexibility, and has excellent transparency with little clouding. The shaped product produced by shaping the resin composition according to the present disclosure also has favorable heat resistance, mechanical strength, light resistance, moisture resistance, low hygroscopicity, etc., and thus is suitable for use in light transmission applications that require high transparency.

The haze of the shaped product is preferably 1.0 % or less, more preferably 0.9 % or less, even more preferably 0.8 % or less, further preferably 0.5 % or less, particularly preferably 0.3 % or less, and most preferably 0.2 % or less. The haze of the shaped product is measured in accordance with JIS K7136 (Plastics - Determination of the haze of transparent materials).

The shaped product can be used in applications such as a laminated glass (an interlayer for a laminated glass, an interlayer for a sound insulation laminated glass), a solar cell (a sealing material of a solar cell), a sealing material of an organic electroluminescent device, a functional film (OCA), a transparent adhesive sheet, an organic EL display, and a touch panel.

(Resin sheet)

A resin sheet according to the present disclosure as one form of the shaped product according to the present disclosure is obtained by forming the resin composition according to the present disclosure in a sheet shape.

The thickness of the resin sheet is not limited, and may be selected as appropriate depending on the haze in the case of using the resin sheet in a laminated glass as an example. The thickness of the resin sheet is preferably 0.01 mm or more, more preferably 0.05 mm or more, and particularly preferably 0.1 mm or more, and is preferably 3.0 mm or less, more preferably 2.5 mm or less, and particularly preferably 2.0 mm.

If the thickness of the resin sheet is 0.01 mm or more, the resin sheet can be kept from becoming wrinkled. If the thickness of the resin sheet is 3.0 mm or less, an increase in the haze of the resin sheet can be prevented to prevent a decrease in optical properties.

The method of producing the resin sheet is not limited, and examples include melt extrusion, calendering, and inflation molding.

In the case of producing the resin sheet by melt extrusion, the resin temperature is preferably 140 °C or more, more preferably 150 °C or more, and particularly preferably 160 °C or more, and is preferably 200 °C or less, more preferably 190 °C or less, and particularly preferably 180 °C or less. If the resin temperature is 140 °C or more, a decrease in flowability can be prevented to prevent the surface of the resin sheet from having defects such as orange-peel-like face and die line, and the extrusion speed can be increased to perform shaping industrially advantageously. If the resin temperature is 200 °C or less, an excessive increase in flowability can be prevented to thus enable shaping of a sheet having uniform thickness.

The surface of the resin sheet may have a planar shape, an embossed shape, or the like. To prevent blocking between the resin sheets, the resin sheets may be stored with a release film being overlaid on one side of the resin sheet.

In the case of producing a laminate using the resin sheet, another functional layer such as an adhesive layer may be provided on the resin sheet. The method of providing the adhesive layer on the resin sheet is not limited. For example, publicly known techniques such as (i) a technique of bonding the resin sheet and the adhesive sheet by heating means such as hot pressing, (ii) a technique of spraying and applying an adhesive solution onto the resin sheet, and (iii) a technique of dipping the resin sheet in an adhesive solution and removing the solvent may be used.

Examples of the method of producing a laminate including the resin sheet and the adhesive layer include (i) a method of laminating the adhesive layer prepared beforehand on at least one side of the resin sheet while extruding the resin sheet, and (ii) a method of co-extruding the resin sheet and the adhesive layer during melt shaping.

As an adhesive composition forming the adhesive layer, a publicly known adhesive composition having favorable adhesiveness to the resin sheet and the adherent may be used.

Examples of preferred adhesive compositions in the case where the adherent is glass include compositions having main components such as (i) polyvinyl butyral, (ii) ethylene vinyl alcohol, (iii) polyurethane, (iv) ethylene / vinyl acetate copolymer, (v) ionomer, and (vi) alkoxysilyl modified product / acid anhydride modified product of a hydrogenated block copolymer made up of a polymer block mainly composed of at least one selected from the group consisting of aromatic vinyl compounds such as styrene and a polymer block mainly composed of a chain conjugated diene compound such as isoprene or butadiene. Of these, a composition having, as a main component, (vi) alkoxysilyl modified product / acid anhydride modified product of a hydrogenated block copolymer is preferable from the viewpoint of transparency and dampproofness.

The thickness of the adhesive layer is not limited, but is preferably 1 μm or more, more preferably 40 μm or more, and particularly preferably 50 μm or more, and is preferably 1 mm or less. If the thickness of the adhesive layer is 1 μm or more, adhesive strength for the resin sheet and sufficient adhesive strength for the adherent can be achieved.

In the case of providing adhesive layers on both sides of the resin sheet, the adhesive layers may be made of the same adhesive composition or different adhesive compositions.

(Laminated glass)

A laminated glass according to the present disclosure is a laminate obtained by interposing the shaped product according to the present disclosure between two glass plates and integrating them. An adhesive layer may be placed between the shaped product and the glass plates.

The haze of the laminated glass is preferably 1.0 % or less, more preferably 0.8 % or less, and particularly preferably 0.5 % or less. The haze of the laminated glass is measured in accordance with JIS K7136 (Plastics - Determination of the haze of transparent materials).

The method of producing the laminated glass is not limited, and examples include (i) a method using an autoclave and (ii) a method using a vacuum laminator. For example, a first glass plate, an adhesive sheet, a resin sheet (shaped product), an adhesive sheet, and a second glass plate are stacked in this order, put in a heat-resistant resin bag capable of depressurization, degasified, and then subjected to (i) a method using an autoclave to adhere them while heating under pressure to produce a laminated glass or (ii) a method using a vacuum laminator to vacuum pressure-bond and adhere them while heating.

In the case of using an autoclave, the heating temperature is preferably 100 °C or more and preferably 150 °C or less, and the pressure is preferably 0.3 MPa or more and preferably 1.1 MPa or less in gauge pressure. In the case of using a vacuum laminator, the heating temperature is preferably 130 °C or more and preferably 170 °C or less, and the pressure is preferably 0.01 MPa or more and preferably 0.1 MPa or less.

The laminated glass preferably has excellent transparency in a visible light region. By using an interlayer including at least one resin sheet formed from the hydrogenated block copolymer [D] whose glass-transition temperature Tg1 on the low temperature side is controlled to -20 °C or more and 20 °C or less, a laminated glass having excellent transparency and having sound insulation property can be produced.

The laminated glass is useful, for example, as a window glass for buildings, a glass for roofs, a heat-insulating wall material for rooms, a glass for windscreen, side windscreen, rear windscreen, and sunroof for automobiles, or a window glass for railway vehicles and ships.

<<Glass plate>>

The thickness of each glass plate used is not limited, but is typically about 0.5 mm or more and 10 mm or less. The glass plate may be an ultrathin glass plate with a thickness of about 0.05 mm or more and 0.5 mm or less. Glass plates with different thicknesses may be used so as to have, for example, a three-layer structure of a glass plate with a thickness of 2.1 mm, a shaped product (for example, an interlayer formed by a resin sheet) with a thickness of 2.4 mm, and a thin glass plate with a thickness of 0.5 mm.

The material of each glass plate is not limited, and examples include aluminosilicate glass, aluminoborosilicate glass, uranium glass, potash glass, silicate glass, crystallized glass, germanium glass, quartz glass, soda glass, lead glass, barium borosilicate glass, and borosilicate glass.

The two or more glass plates used in the laminated glass may have the same thickness, material, etc. or different thicknesses, materials, etc.

EXAMPLES

The following will provide a more specific description of the present disclosure based on Examples and Comparative Examples. However, the present disclosure is not limited to the following example. In the following description, "parts" and "%" are by mass, unless otherwise specified. The following methods were used to perform evaluation in this example.

(1) Weight-average molecular weight (Mw) and molecular weight distribution (Mw/Mn)

The molecular weights of the block copolymer [C] and the hydrogenated block copolymer [D] were measured at 40 °C using tetrahydrofuran (THF) as an eluant, and a value expressed in terms of standard polystyrene was calculated. As a measurement device, a GPC device (HLC8320GPC manufactured by Tosoh Corporation) was used. The results are shown in Table 1.

(2) Ratio (wA:wB) between wA and wB

Regarding the ratio (wA:wB) between wA and wB where wA is the mass fraction of the total amount of the polymer blocks [A] to the whole block copolymer [C] and wB is the mass fraction of the total amount of the polymer blocks [B] to the whole block copolymer [C], the mass fraction of each polymer block was calculated from the numbers of parts of the aromatic vinyl compound, the chain conjugated diene-based compound, and the other vinyl compounds used in the polymerization of the polymer block in the production of the block copolymer [C] and the polymerization conversion rate from the monomers to the polymer at the polymerization end of the polymer block measured using gas chromatography (GC).

(3) Proportion of 1,2- and 3,4-addition polymerization-derived structural unit

The proportion of the structural unit polymerized by 1,2-bond and/or 3,4-bond (1,2- and 3,4-addition polymerization-derived structural unit) in the structural unit [b] derived from a chain conjugated diene compound in the polymer block [B] was calculated by measuring the 1H-NMR of the block copolymer [C]. The results are shown in Table 1.

(4) Hydrogenation rate

The hydrogenation rate of the main chain, side chain, and aromatic ring of the hydrogenated block copolymer [D] was calculated by measuring the 1H-NMR of the block copolymer [C] and the hydrogenated block copolymer [D]. The results are shown in Table 1.

(5) Glass-transition temperature (Tg)

Pellets containing the hydrogenated block copolymer [D] as a main component were pressed to produce a sheet with a thickness of about 1 mm. A test piece with a length of 50 mm and a width of 10 mm was cut out of this sheet. The dynamic viscoelastic property of the test piece was measured in accordance with JIS K7244-2 using a viscoelasticity measurement device ("ARES" manufactured by TA Instruments Japan Inc.) at a frequency of 1 Hz and -100 °C or more and +150 °C or less at a heating rate of 5 °C/min. The glass-transition temperature (Tgi) on the low temperature side and the glass-transition temperature ($Tg_2$) on the high temperature side were each calculated from the peak top temperature with respect to the loss tangent tanδ. The results are shown in Table 1.

(6) Evaluation of blocking property

A stainless steel tube (inner diameter: 51 mm, length: 150 mm) with a bottom lid was charged with 40 g of a resin composition (pellets (Comparative Example 1) or pellets to which an antiblocking agent was externally added (other than Comparative Example 1)), and then a stainless steel inner lid with a diameter of 50 mm and a weight of 532 g were placed on the top of the material (in this state, the lowermost part of the pellets in the tube was under a load of 27 g/cm2 (corresponding to a load of charged pellets at a height of about 0.5 m)).

While maintaining this load state, the resin composition was held in an oven of a temperature of 40 °C. After holding the resin composition for 96 hr, the resin composition was returned to an environment of 25 °C, and the bottom lid of the stainless steel tube was removed and the resin composition was taken out.

In the evaluation of the blocking property, "excellent" corresponds to (i) the case where there were no blocked pellets, "good" corresponds to (ii) the case where there were blocked pellets but the blocked pellets collapsed easily when touched with fingers, and "poor" corresponds to (iii) the case where there were blocked pellets and the blocked pellets did not collapse easily when touched with fingers. The results are shown in Table 1.

(7) Evaluation of clouding of shaped product

The clouding of the shaped product was evaluated by measuring the haze of a test piece obtained by interposing, between two glass plates (thickness: 2 mm, material: borosilicate glass, haze: 0.02 % or less), either (i) a resin sheet [G] with a thickness of 0.76 mm formed from the resin composition according to the present disclosure or (ii) a laminate in which the resin sheet [G] with a thickness of 0.76 mm formed from the resin composition according to the present disclosure is interposed between two adhesive sheets [L] (thickness: 0.05 mm), and adhering them together. The results are shown in Table 1.

(7-1) Production and haze measurement of test piece (HA) having no adhesive layer

A resin sheet sample with a length of 60 mm and a width of 50 mm was cut out of the resin sheet [G], and placed between two white glass plates (material: borosilicate glass, haze: 0.02 % or less) with a length of 60 mm, a width of 50 mm, and a thickness of 2 mm and stacked. The laminate was then put in a bag with a thickness of 75 μm having a layer structure of Nylon® (Nylon is a registered trademark in Japan, other countries, or both) (NY) / adhesive layer / polypropylene (PP), and the opening was heat-sealed while degassing the bag by using a sealed packing machine (BH-951, manufactured by Panasonic Corporation) to hermetically pack the laminate. Subsequently, the hermetically packed laminate was put in an autoclave and heat-pressed at a temperature of 140 °C and a pressure of 0.8 MPa for 30 min to produce a test piece of a laminated glass [H] having the resin sheet [G] adhering to its glass surface.

The haze of the obtained test piece (HA) of the laminated glass [H] was measured using a haze meter (NDH7000SP, manufactured by Nippon Denshoku Industries Co., Ltd.). The results are shown in Table 1.

In the evaluation, "good" corresponds to the case where the haze was 1 % or less, and "poor" corresponds to the case where the haze was more than 1 %. The results are shown in Table 1.

(7-2) Production and haze measurement of test piece (HB) having adhesive layer

A sample with a length of 60 mm and a width of 50 mm was cut out of the resin sheet [G]. Two samples with a length of 60 mm and a width of 50 mm were cut out of the adhesive sheet [L]. Two white glass plates (material: borosilicate glass, haze: 0.02 % or less) with a length of 60 mm, a width of 50 mm, and a thickness of 2 mm were prepared. The white glass plate, the adhesive sheet [L], the resin sheet [G], the adhesive sheet [L], and the white glass plate were stacked in this order. The laminate was then put in a bag with a thickness of 75 $\mu$m having a layer structure of Nylon® (Nylon is a registered trademark in Japan, other countries, or both) (NY) / adhesive layer / polypropylene (PP), and the opening was heat-sealed while degassing the bag by using a sealed packing machine (BH-951, manufactured by Panasonic Corporation) to hermetically pack the laminate. Subsequently, the hermetically packed laminate was put in an autoclave and heat-pressed at a temperature of 140 °C and a pressure of 0.8 MPa for 30 min to produce a test piece of the laminated glass [H].

The haze of the obtained test piece (HB) of the laminated glass [H] was measured using a haze meter (NDH7000SP, manufactured by Nippon Denshoku Industries Co., Ltd.). The results are shown in Table 1.

In the evaluation, "good" corresponds to the case where the haze was 1 % or less, and "poor" corresponds to the case where the haze was more than 1 %. The results are shown in Table 1.

[Production Example 1] Production of hydrogenated block copolymer [D1]

270 parts of dehydrated cyclohexane and 0.38 parts of ethylene glycol dibutyl ether were put in a reactor equipped with a stirrer whose inside had been sufficiently replaced by nitrogen. Further, 0.47 parts of n-butyllithium (15 % cyclohexane solution) was added. While stirring the whole content at 60 °C, 10 parts of dehydrated styrene was continuously added into the reactor for 40 min. After the addition end, the whole content was further stirred at 60 °C for 20 min. As a result of measuring the reaction solution by gas chromatography (GC), the polymerization conversion rate at the time was 99.5 %. Subsequently, 80 parts of dehydrated isoprene was continuously added to the reaction solution for 100 min, and, after the addition end, stirring was continued for 20 min. The polymerization conversion rate at the time was 99.5 %. Thereafter, 10 parts of dehydrated styrene was continuously added for 60 min, and, after the addition end, the whole content was stirred for 30 min. The polymerization conversion rate at the time was approximately 100 %.

0.5 parts of isopropyl alcohol was then added to the reaction solution to terminate the reaction. The obtained block copolymer [C] was a triblock copolymer of (A)-(B)-(A) type, and the weight-average molecular weight (Mw) was 86,300, the molecular weight distribution (Mw/Mn) was 1.03, wA:wB = 20:80, and the proportion of the 1,2- and 3,4-addition polymerization-derived structural unit to the whole isoprene-derived structural unit was 51 %.

The polymer solution was then transported to a pressure-resistant reactor equipped with a stirrer, to which 7.0 parts of a diatomaceous earth-supported nickel catalyst (product name: "E22U", carrying amount of nickel: 60 %, manufactured by JGC Catalysts and Chemicals Ltd.) as a hydrogenation catalyst and 80 parts of dehydrated cyclohexane were added and mixed. The inside of the reactor was replaced by hydrogen gas, to which hydrogen was further fed while stirring the solution, and hydrogenation reaction was continued at a temperature of 190 °C and a pressure of 4.5 MPa for 6 hr. A hydrogenated block copolymer [D1] after the hydrogenation reaction had a weight-average molecular weight (Mw) of 91,300 and a molecular weight distribution (Mw/Mn) of 1.04.

After the hydrogenation reaction end, the reaction solution was filtered to remove the hydrogenation catalyst, and then 1.0 part of a xylene solution prepared by dissolving 0.1 parts of pentaerythritol tetrakis[3-(3,5-di-t-butyl-4-hydroxyphenyl)propionate] (product name: "Songnox® 1010" (Songnox is a registered trademark in Japan, other countries, or both), manufactured by KOYO Chemical Research Center) as a phenol-based antioxidant was added to the filtrate, and dissolved. Subsequently, cyclohexane, xylene, and other volatile components as solvents were removed from the solution using a cylindrical concentration dryer (product name: "Kontro", manufactured by Hitachi, Ltd.) at a temperature of 260 °C and a pressure of 0.001 MPa or less.

The molten polymer was melt-extruded at a resin temperature of 230 °C and cut in water at a temperature of 30 °C using an underwater cutter (EUP10, manufactured by ECON Co.) connected to a cylindrical concentration dryer, to obtain 93 parts of approximately ellipsoidal pellets containing the hydrogenated block copolymer [D1] as a main component.

The pellets of the hydrogenated block copolymer [D1] were approximately ellipsoidal. Regarding the shape of the obtained pellets, the average major axis and the average minor axis when measuring 10 pellets were respectively 4.3 mm and 1.6 mm.

The obtained pellet-shaped hydrogenated block copolymer [D1] had a weight-average molecular weight (Mw) of 90,400, a molecular weight distribution (Mw/Mn) of 1.09, and a hydrogenation rate of approximately 100 % in both "main chain and side chain" and "aromatic ring".

A shaped product of the hydrogenated block copolymer [D1] was colorless and transparent, and had Tg1 of -11.3 °C and Tg2 of 109 °C.

[Production Example 2] Production of adhesive sheet [L1]

(Production of silane-modified block copolymer composition [K1])

300 parts of dehydrated cyclohexane, 10 parts of dehydrated styrene, and 1.1 parts of dibutyl ether were put in a reactor equipped with a stirrer whose inside had been sufficiently replaced by nitrogen. Subsequently, 0.75 parts of n-butyllithium (15 % cyclohexane solution) was added while stirring the whole content at 60 °C to start polymerization. While stirring the whole content at 60 °C, 15 parts of dehydrated styrene was continuously added into the reactor for 40 min to promote the polymerization reaction. After the addition end, the whole content was further stirred at 60 °C for 20 min. As a result of measuring the reaction solution by GC, the polymerization conversion rate at the time was 99.5 %.

Subsequently, 50 parts of dehydrated isoprene was continuously added to the reaction solution for 130 min, and, after the addition end, stirring was continued for 30 min. As a result of measuring the reaction solution by GC, the polymerization conversion rate at the time was 99.5 %.

Thereafter, 25 parts of dehydrated styrene was continuously added to the reaction solution for 70 min, and, after the addition end, the whole content was stirred for 60 min. As a result of measuring the reaction solution by GC, the polymerization conversion rate at the time was approximately 100 %.

1.0 part of isopropyl alcohol was then added to the reaction solution to terminate the reaction, thus obtaining a polymer solution. A block copolymer [C1] contained in the polymer solution was a triblock copolymer of (A)-(B)-(A) type, and the weight-average molecular weight (Mw) was 56,700, the molecular weight distribution (Mw/Mn) was 1.03, and wA:wB = 50:50.

The polymer solution was then transported to a pressure-resistant reactor equipped with a stirrer, to which 4.0 parts of a diatomaceous earth-supported nickel catalyst (product name: "E22U", carrying amount of nickel: 60 %, manufactured by JGC Catalysts and Chemicals Ltd.) as a hydrogenation catalyst and 100 parts of dehydrated cyclohexane were added and mixed. The inside of the reactor was replaced by hydrogen gas, to which hydrogen was further fed while stirring the solution, and hydrogenation reaction was continued at a temperature of 190 °C and a pressure of 4.5 MPa for 6 hr.

A hydrogenated block copolymer [D2] contained in the reaction solution obtained by the hydrogenation reaction had a weight-average molecular weight (Mw) of 60,100 and a molecular weight distribution (Mw/Mn) of 1.04.

After the hydrogenation reaction end, the reaction solution was filtered to remove the hydrogenation catalyst, and then 2.0 parts of a xylene solution prepared by dissolving 0.1 parts of pentaerythritol tetrakis[3-(3,5-di-t-butyl-4-hydroxyphenyl)propionate] (product name: "AO60", manufactured by ADEKA Corporation) as a phenol-based antioxidant was added to the obtained solution, and dissolved.

Subsequently, cyclohexane, xylene, and other volatile components as solvents were removed from the solution using a cylindrical concentration dryer (product name: "Kontro", manufactured by Hitachi, Ltd.) at a temperature of 260 °C and a pressure of 0.001 MPa or less. The molten polymer was extruded from the die in a strand shape, cooled, and cut by a pelletizer to obtain 94 parts of pellets made of the hydrogenated block copolymer [D2].

The pellets of the hydrogenated block copolymer [D2] were approximately ellipsoidal. Regarding the shape of the obtained pellets, the average major axis and the average minor axis when measuring 10 pellets were respectively 4.5 mm and 1.8 mm.

The obtained pellet-shaped hydrogenated block copolymer [D2] had a weight-average molecular weight (Mw) of 59,500, a molecular weight distribution (Mw/Mn) of 1.06, a hydrogenation rate of approximately 100 % in both "main chain and side chain" and "aromatic ring", and Tg2 of 131 °C.

To 100 parts of the obtained pellets of the hydrogenated block copolymer [D2], 2.0 parts of vinyltrimethoxysilane and 0.2 parts of 2,5-dimethyl-2,5-di(t-butylperoxy)hexane (product name: "PERHEXA® 25B" (PERHEXA is a registered trademark in Japan, other countries, or both), manufactured by NOF Corporation) were added to obtain a mixture. This mixture was kneaded using a twin-screw extruder (product name: "TEM-37B", manufactured by Toshiba Machine Co., Ltd.) at a resin temperature of 200 °C with a detention time of 60 sec to 70 sec, extruded in a strand shape, air-cooled, and then cut by a pelletizer to obtain 97 parts of pellets mainly composed of a modified hydrogenated block copolymer having an alkoxysilyl group (hereafter referred to as "silane-modified block copolymer composition [K1]").

10 parts of the pellets of the silane-modified block copolymer composition [K1] was dissolved in 100 parts of cyclohexane. The obtained solution was then poured into 400 parts of dehydrated methanol to coagulate the silane-modified block copolymer composition [K1], and the coagulate was taken by filtration. The filtrate was vacuum-dried at 25 °C to isolate 9.0 parts of a crumb of the silane-modified block copolymer composition [K1].

As a result of measuring the FT-IR of the silane-modified block copolymer composition [K1], new absorption bands were observed at 1090 $cm^{-1}$ attributed to a Si-OCH$_3$ group and at 825 $cm^{-1}$ and 739 $cm^{-1}$ attributed to a Si-CH$_2$ group, at different positions from absorption bands (1075 $cm^{-1}$, 808 $cm^{-1}$, and 766 $cm^{-1}$) derived from a Si-OCH$_3$ group and a Si-CH group of vinyltrimethoxysilane.

As a result of measuring the 1H-NMR (in deuterated chloroform) of the silane-modified block copolymer composition [K1], a peak based on a proton of a methoxy group was observed at 3.6 ppm. From the peak area ratio, it was confirmed that 1.9 parts of vinyltrimethoxysilane bound to 100 parts of the hydrogenated block copolymer [D2]. The silane-modified block copolymer composition [K1] had Tg2 of 126 °C.

(Production of adhesive sheet [L1])

Using the silane-modified block copolymer composition [K1], a T die of 300 mm in width was connected to a single-screw extruder equipped with a full-flight screw with a diameter of 20 mm, and a sheet winder was installed to produce an adhesive sheet [L1] with a thickness of 50 $\mu$m.

[Production Example 3] Production of adhesive sheet [L2]

(Production of adhesive composition [K2])

300 parts of dehydrated cyclohexane, 10 parts of dehydrated styrene, and 1.1 parts of dibutyl ether were put in a reactor equipped with a stirrer whose inside had been sufficiently replaced by nitrogen. Subsequently, 0.99 parts of n-butyllithium (15 % cyclohexane solution) was added while stirring the whole content at 60 °C to start polymerization. While stirring the whole content at 60 °C, 15 parts of dehydrated styrene was continuously added into the reactor for 40 min to promote the polymerization reaction. After the addition end, the whole content was further stirred at 60 °C for 20 min. As a result of measuring the reaction solution by GC, the polymerization conversion rate at the time was 99.5 %.

Subsequently, 50 parts of dehydrated isoprene was continuously added to the reaction solution for 130 min, and, after the addition end, stirring was continued for 30 min. As a result of measuring the reaction solution by GC, the polymerization conversion rate at the time was 99.5 %.

Thereafter, 25 parts of dehydrated styrene was continuously added to the reaction solution for 70 min, and, after the addition end, the whole content was stirred for 60 min. As a result of measuring the reaction solution by GC, the polymerization conversion rate at the time was approximately 100 %.

1.0 part of isopropyl alcohol was then added to the reaction solution to terminate the reaction, thus obtaining a polymer solution. A block copolymer contained in the polymer solution was a triblock copolymer of (A)-(B)-(A) type, and the weight-average molecular weight (Mw) was 43,000, the molecular weight distribution (Mw/Mn) was 1.03, and wA:wB = 50:50.

The polymer solution was then transported to a pressure-resistant reactor equipped with a stirrer, to which 4.0 parts of a diatomaceous earth-supported nickel catalyst (product name: "E22U", carrying amount of nickel: 60 %, manufactured by JGC Catalysts and Chemicals Ltd.) as a hydrogenation catalyst and 100 parts of dehydrated cyclohexane were added and mixed. The inside of the reactor was replaced by hydrogen gas, to which hydrogen was further fed while stirring the solution, and hydrogenation reaction was continued at a temperature of 190 °C and a pressure of 4.5 MPa for 6 hr.

A hydrogenated block copolymer [D3] contained in the reaction solution obtained by the hydrogenation reaction had a weight-average molecular weight (Mw) of 44,900 and a molecular weight distribution (Mw/Mn) of 1.04.

After the hydrogenation reaction end, the reaction solution was filtered to remove the hydrogenation catalyst, and then 2.0 parts of a xylene solution prepared by dissolving 0.1 parts of pentaerythritol tetrakis[3-(3,5-di-t-butyl-4-hydroxyphenyl)propionate] (product name: "AO60", manufactured by ADEKA Corporation) as a phenol-based antioxidant was added to the obtained solution, and dissolved.

Subsequently, cyclohexane, xylene, and other volatile components as solvents were removed from the solution using a cylindrical concentration dryer (product name: "Kontro", manufactured by Hitachi, Ltd.) at a temperature of 260 °C and a pressure of 0.001 MPa or less. The molten polymer was extruded from the die in a strand shape, cooled, and cut by a pelletizer to obtain 94 parts of pellets made of the hydrogenated block copolymer [D3].

The obtained pellet-shaped hydrogenated block copolymer [D3] had a weight-average molecular weight (Mw) of 44,600, a molecular weight distribution (Mw/Mn) of 1.06, a hydrogenation rate of approximately 100 % in both "main chain and side chain" and "aromatic ring", and Tg2 of 131 °C.

To 100 parts of the obtained pellets of the hydrogenated block copolymer [D3], 2.0 parts of vinyltrimethoxysilane and 0.2 parts of 2,5-dimethyl-2,5-di(t-butylperoxy)hexane (product name: "PERHEXA® 25B" (PERHEXA is a registered trademark in Japan, other countries, or both), manufactured by NOF Corporation) were added to obtain a mixture. This mixture was kneaded using a twin-screw extruder (product name: "TEM-37B", manufactured by Toshiba Machine Co., Ltd.) at a resin temperature of 200 °C with a detention time of 60 sec to 70 sec, extruded in a strand shape, air-cooled, and then cut by a pelletizer to obtain 97 parts of pellets mainly composed of a modified hydrogenated block copolymer having an alkoxysilyl group (hereafter referred to as "adhesive composition [K2]").

10 parts of the pellets of the adhesive composition [K2] was dissolved in 100 parts of cyclohexane. The obtained solution was then poured into 400 parts of dehydrated methanol to coagulate the adhesive composition [K2], and the coagulate was taken by filtration. The filtrate was vacuum-dried at 25 °C to isolate 9.0 parts of a crumb of the adhesive composition [K2].

As a result of measuring the FT-IR of the adhesive composition [K2], new absorption bands were observed at 1090 cm$^{-1}$ attributed to a Si-OCH$_3$ group and at 825 cm$^{-1}$ and 739 cm$^{-1}$ attributed to a Si-CH$_2$ group, at different positions from absorption bands (1075 cm$^{-1}$, 808 cm$^{-1}$, and 766 cm$^{-1}$) derived from a Si-OCH$_3$ group and a Si-CH group of vinyltrimethoxysilane.

As a result of measuring the $^1$H-NMR (in deuterated chloroform) of the adhesive composition [K2], a peak based on a proton of a methoxy group was observed at 3.6 ppm. From the peak area ratio, it was confirmed that 1.9 parts of vinyltrimethoxysilane bound to 100 parts of the hydrogenated block copolymer [D3]. The adhesive composition [K2] had Tg2 of 126 °C.

(Production of adhesive sheet [L2])

Using the adhesive composition [K2], a T die of 300 mm in width was connected to a single-screw extruder equipped with a full-flight screw with a diameter of 20 mm, and a sheet winder was installed to produce an adhesive sheet [L2] with a thickness of 50 μm.

(Example 1)

0.04 parts of zinc stearate (product name "ZINC STEARATE GF-200", manufactured by NOF Corporation, particle diameter: 20 μm) as an antiblocking agent was added to 100 parts of the pellets of the hydrogenated block copolymer [D1] produced in Production Example 1, and mixed using a mixer to produce a resin composition [M1]. The blocking property was evaluated using the resin composition [M1].

In the test of the blocking property, there were many blocked pellets, but the blocked pellets collapsed easily when touched with fingers. That is, the blocking property was evaluated as "good".

Next, the resin composition [M1] was shaped to produce a resin sheet [G1] with a thickness of 0.76 mm (760 μm) by adjusting the molten resin temperature, the T die temperature, and the casting roll temperature, using an extruded sheet forming machine including a T-die film melt extrusion device (width of T-die: 600 mm) (provided with an extruder having a screw with a diameter of 40 mm), a casting roll (provided with an embossing pattern), and a sheet take-up device. The resin sheet [G1] was wound around a roll together with a polyethyleneterephthalate (PET) film with a thickness of 25 μm.

As a result of evaluating the clouding of the shaped product, the haze was 0.3 %. That is, the clouding of the shaped product was evaluated as "good".

(Example 2)

A resin composition [M2] was produced in the same way as in Example 1 except that, in Example 1, the external additive amount of the antiblocking agent was changed from 0.04 parts to 0.005 parts. The blocking property of the resin composition [M2] was then evaluated.

In the test of the blocking property, there were many blocked pellets, but the blocked pellets collapsed easily when touched with fingers. That is, the blocking property was evaluated as "good".

Next, the resin composition [M2] was used to produce a resin sheet [G2] with a thickness of 760 μm in the same way as in Example 1. As a result of evaluating the clouding of the shaped product, the haze was 0.2 %. That is, the clouding of the shaped product was evaluated as "good".

(Example 3)

A resin composition [M3] was produced in the same way as in Example 1 except that, in Example 1, 0.08 parts of aluminum stearate (product name "ALUMINUM STEARATE #300", manufactured by NOF Corporation, particle diameter: 26 μm) was used as an antiblocking agent instead of 0.04 parts of zinc stearate (product name "ZINC STEARATE GF-200", manufactured by NOF Corporation). The blocking property of the resin composition [M3] was then evaluated.

In the test of the blocking property, there were a slight amount of blocked pellets, but the blocked pellets collapsed easily when touched with fingers. That is, the blocking property was evaluated as "good".

Next, the resin composition [M3] was used to produce a resin sheet [G3] with a thickness of 760 μm in the same way as in Example 1. As a result of evaluating the clouding of the shaped product, the haze was 0.5 %. That is, the clouding of the shaped product was evaluated as "good".

(Example 4)

A resin composition [M4] was produced in the same way as in Example 1 except that, in Example 1, the external additive amount of the antiblocking agent was changed from 0.04 parts to 0.12 parts. The blocking property of the resin composition [M4] was then evaluated.

In the test of the blocking property, there were a slight amount of blocked pellets, but the blocked pellets collapsed easily when touched with fingers. That is, the blocking property was evaluated as "good".

Next, the resin composition [M4] was used to produce a resin sheet [G4] with a thickness of 760 $\mu$m in the same way as in Example 1. As a result of evaluating the clouding of the shaped product, the haze was 0.9 %. That is, the clouding of the shaped product was evaluated as "good".

(Example 5)

A laminate formed by stacking in the order of white glass plate / adhesive sheet [L1] produced in Production Example 2 / resin sheet [G1] with a thickness of 760 $\mu$m produced using the resin composition [M1] used in Example 1 / adhesive sheet [L1] produced in Production Example 2 / white glass plate was used. As a result of evaluating the clouding of the shaped product, the haze was 0.5 %. That is, the clouding of the shaped product was evaluated as "good".

Further, two adhesive sheets [L1] with a thickness of 50 $\mu$m produced using the adhesive composition [K1] produced in Production Example 2 and one resin sheet [G1] with a thickness of 760 $\mu$m produced using the resin composition [M1] used in Example 1 were placed between two blue glass plates (thickness: 1.2 mm, length: 300 mm, width: 25 mm) and stacked in the order of blue glass plate / adhesive sheet [L1]] / resin sheet [G1] / adhesive sheet [L1] / blue glass plate.

The laminate was put in a bag with a thickness of 75 $\mu$m having a layer structure of Nylon® (NY) / adhesive layer / polypropylene (PP), both sides of the bag were heat-sealed by a heat sealer while 200 mm width of the central portion of the bag opening was left without seal, and then the opening was heat-sealed while degassing the bag by using a sealed packing machine (BH-951, manufactured by Panasonic Corporation) to hermetically pack the laminate. The resin bag fit tightly to the laminate along the shape of the laminate. Subsequently, the hermetically packed laminate was put in an autoclave and heat-pressed at a temperature of 140 °C and a pressure of 0.8 MPa for 30 min to produce a test piece for sound transmission loss measurement.

The loss factor corresponding to the frequency was measured using the test piece for sound transmission loss measurement by a central exciting method in accordance with JIS-K7391, using a vibration damping tester (manufactured by Rion Co., Ltd.) (measurement temperature: 20 °C, frequency: 125 Hz or more and 5000 Hz or less). The sound transmission loss corresponding to the frequency was calculated from the ratio of the calculated loss factor and the resonance frequency of the laminated glass test piece. In a frequency range of 2000 Hz or more and 4000 Hz or less, the sound transmission loss was not less than 35 dB, and was evaluated as "good".

(Example 6)

A laminate formed by stacking in the order of white glass plate / adhesive sheet [L2] produced in Production Example 3 / resin sheet [G1] with a thickness of 760 $\mu$m produced using the resin composition [M1] used in Example 1 / adhesive sheet [L2] produced in Production Example 2 / white glass plate was used. As a result of evaluating the clouding of the shaped product, the haze was 0.5 %. That is, the clouding of the shaped product was evaluated as "good".

Further, two adhesive sheets [L2] with a thickness of 50 $\mu$m produced using the adhesive composition [K2] produced in Production Example 3 and one resin sheet [G1] with a thickness of 760 $\mu$m produced using the resin composition [M1] used in Example 1 were placed between two blue glass plates (thickness: 1.2 mm, length: 300 mm, width: 25 mm) and stacked in the order of blue glass plate / adhesive sheet [L2]] / resin sheet [G1] / adhesive sheet [L2] / blue glass plate.

The laminate was put in a bag with a thickness of 75 $\mu$m having a layer structure of Nylon® (NY) / adhesive layer / polypropylene (PP), both sides of the bag were heat-sealed by a heat sealer while 200 mm width of the central portion of the bag opening was left without seal, and then the opening was heat-sealed while degassing the bag by using a sealed packing machine (BH-951, manufactured by Panasonic Corporation) to hermetically pack the laminate. The resin bag fit tightly to the laminate along the shape of the laminate. Subsequently, the hermetically packed laminate was put in an autoclave and heat-pressed at a temperature of 140 °C and a pressure of 0.8 MPa for 30 min to produce a test piece for sound transmission loss measurement.

The loss factor corresponding to the frequency was measured using the test piece for sound transmission loss measurement by a central exciting method in accordance with JIS-K7391, using a vibration damping tester (manufactured by Rion Co., Ltd.) (measurement temperature: 20 °C, frequency: 125 Hz or more and 5000 Hz or less). The sound transmission loss corresponding to the frequency was calculated from the ratio of the calculated loss factor and the resonance frequency of the laminated glass test piece. In a frequency range of 2000 Hz or more and 4000 Hz or less, the sound transmission loss was not less than 35 dB, and was evaluated as "good".

(Example 7)

0.04 parts of zinc stearate (product name "ZINC STEARATE GF-200", manufactured by NOF Corporation, particle diameter: 20 μm) as an antiblocking agent was added to 100 parts of the pellets of the hydrogenated block copolymer [D2] produced in Production Example 2, and mixed using a mixer to produce a resin composition [M5]. The blocking property was evaluated using the resin composition [M5].

In the test of the blocking property, there were many blocked pellets, but the blocked pellets collapsed easily when touched with fingers. That is, the blocking property was evaluated as "good".

Next, the resin composition [M5] was shaped to produce a resin sheet [G5] with a thickness of 0.76 mm (760 μm) by adjusting the molten resin temperature, the T die temperature, and the casting roll temperature, using an extruded sheet forming machine including a T-die film melt extrusion device (width of T-die: 600 mm) (provided with an extruder having a screw with a diameter of 40 mm), a casting roll (provided with an embossing pattern), and a sheet take-up device. The resin sheet [G5] was wound around a roll together with a polyethyleneterephthalate (PET) film with a thickness of 25 μm.

As a result of evaluating the clouding of the shaped product, the haze was 0.4 %. That is, the clouding of the shaped product was evaluated as "good".

(Example 8)

0.04 parts of zinc stearate (product name "ZINC STEARATE GF-200", manufactured by NOF Corporation, particle diameter: 20 μm) as an antiblocking agent was added to 100 parts of the pellets of the silane-modified block copolymer composition [K1] produced in Production Example 2, and mixed using a mixer to produce a resin composition [M6]. The blocking property was evaluated using the resin composition [M6].

In the test of the blocking property, there were many blocked pellets, but the blocked pellets collapsed easily when touched with fingers. That is, the blocking property was evaluated as "good".

Next, the resin composition [M6] was shaped to produce a resin sheet [G6] with a thickness of 0.76 mm (760 μm) by adjusting the molten resin temperature, the T die temperature, and the casting roll temperature, using an extruded sheet forming machine including a T-die film melt extrusion device (width of T-die: 600 mm) (provided with an extruder having a screw with a diameter of 40 mm), a casting roll (provided with an embossing pattern), and a sheet take-up device. The resin sheet [G6] was wound around a roll together with a polyethyleneterephthalate (PET) film with a thickness of 25 μm.

As a result of evaluating the clouding of the shaped product, the haze was 0.3 %. That is, the clouding of the shaped product was evaluated as "good".

(Comparative Example 1)

The blocking property was evaluated without externally adding any antiblocking agent to the pellets of the hydrogenated block copolymer [D1] produced in Production Example 1. In the test of the blocking property, there were many blocked pellets, and the blocked pellets did not collapse easily when touched with fingers. That is, the blocking property was evaluated as "poor".

Due to the blocking of the pellets in the hopper of the forming machine, a shaped product could not be produced, and therefore the clouding of the shaped product could not be evaluated.

(Comparative Example 2)

A resin composition [M7] was produced in the same way as in Example 1 except that, in Example 1, the external additive amount of the antiblocking agent was changed from 0.04 parts to 0.45 parts. The blocking property of the resin composition [M7] was then evaluated.

In the test of the blocking property, there were many blocked pellets, but the blocked pellets collapsed easily when touched with fingers. That is, the blocking property was evaluated as "good".

Next, the resin composition [M7] was used to produce a resin sheet [G7] with a thickness of 760 μm in the same way as in Example 1. As a result of evaluating the clouding of the shaped product, the haze was 1.2 %. That is, the clouding of the shaped product was evaluated as "poor".

(Comparative Example 3)

A resin composition [M8] was produced in the same way as in Example 1 except that, in Example 1, 0.06 parts of ethylene bisstearamide (product name "KAO WAX", manufactured by Kao Chemical Corporation) was used as an antiblocking agent instead of 0.04 parts of zinc stearate (product name "ZINC STEARATE GF-200", manufactured by NOF Corporation). The blocking property of the resin composition [M8] was then evaluated.

In the test of the blocking property, there were many blocked pellets, but the blocked pellets collapsed easily when touched with fingers. That is, the blocking property was evaluated as "good".

Next, the resin composition [M8] was used to produce a resin sheet [G8] with a thickness of 760 $\mu$m in the same way as in Example 1. As a result of evaluating the clouding of the shaped product, the haze was 1.2 %. That is, the clouding of the shaped product was evaluated as "poor".

(Comparative Example 4)

A resin composition [M9] was produced in the same way as in Comparative Example 3 except that, in Comparative Example 3, the external additive amount of the antiblocking agent was changed from 0.06 parts to 0.005 parts. The blocking property of the resin composition [M9] was then evaluated.

In the test of the blocking property, there were many blocked pellets, and the blocked pellets did not collapse easily when touched with fingers. That is, the blocking property was evaluated as "poor".

Due to the blocking of the pellets in the hopper of the forming machine, a shaped product could not be produced, and therefore the clouding of the shaped product could not be evaluated.

[Table 1]

| | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|
| Composition type | M1 | M2 | M3 | M4 | M1 | M1 | M5 | M6 | D1 | M7 | M8 | M9 |
| Additive amount (parts by mass) | 100 | 100 | 100 | 100 | 100 | 100 | 100 | 100 | 100 | 100 | 100 | 100 |
| Shape | Approximately ellipsoidal | Approximately ellipsoidal | Approximately ellipsoidal | Approximately ellipsoidal | Approximately ellipsoidal | Approximately ellipsoidal | Approximately ellipsoidal | Approximately ellipsoidal | Approximately ellipsoidal | Approximately ellipsoidal | Approximately ellipsoidal | Approximately ellipsoidal |
| Average major axis (mm) axis | 4.3 | 4.3 | 4.3 | 4.3 | 4.3 | 4.3 | 4.5 | 4.5 | 4.3 | 4.3 | 4.3 | 4.3 |
| Average major (mm) Average minor axis (mm) | 1.6 | 1.6 | 1.6 | 1.6 | 1.6 | 1.6 | 1.8 | 1.8 | 1.6 | 1.6 | 1.6 | 1.6 |
| Weight-average molecular weight (Mw) | 90400 | 90400 | 90400 | 90400 | 90400 | 90400 | 59500 | 59500 | 90400 | 90400 | 90400 | 90400 |
| Molecular weight distribution (Mw/Mn) | 1.09 | 1.09 | 1.09 | 1.09 | 1.09 | 1.09 | 1.06 | 1.06 | 1.09 | 1.09 | 1.09 | 1.09 |

| | | | | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|---|---|---|---|---|
| | | | | | Type | D1 | D1 | D1 | D1 | D1 | D1 | D2 | D2 | D1 | D1 | D1 | D1 |
| Shaped product | Resin composition | Pellets | Hydrogenated block co-polymer [D] | | Hydrogenation rate of main chain and side chain (%) | 100 | 100 | 100 | 100 | 100 | 100 | 100 | 100 | 100 | 100 | 100 | 100 |
| | | | | | Hydrogenation rate of aromatic ring (%) | 100 | 100 | 100 | 100 | 100 | 100 | 100 | 100 | 100 | 100 | 100 | 100 |
| | | | | | Weight-average molecular weight (Mw) | 91300 | 91300 | 91300 | 91300 | 91300 | 91300 | 60100 | 60100 | 91300 | 91300 | 91300 | 91300 |
| | | | | | Molecular weight distribution (Mw/Mn) | 1.04 | 1.04 | 1.04 | 1.04 | 1.04 | 1.04 | 1.04 | 1.04 | 1.04 | 1.04 | 1.04 | 1.04 |
| | | | | | Tg1 (°C) | -11.3 | -11.3 | -11.3 | -11.3 | -11.3 | -11.3 | - | - | - | - | -11.3 | -11.3 |
| | | | | | Tg2 (°C) | 109 | 109 | 109 | 109 | 109 | 109 | 131 | 131 | 109 | 109 | 109 | 109 |

| | | | | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|---|---|---|---|---|
| | | | Block co-polymer [C] | | Type | C | C | C | C | C | C | C1 | C1 | C | C | C | C |
| | | | | | wA:wB | 20:80 | 20:80 | 20:80 | 20:80 | 20:80 | 20:80 | 50:50 | 50:50 | 20:80 | 20:80 | 20:80 | 20:80 |
| | | | | | Proportion of 1,2- and 3,4-addition po-lymeriza-tion-derived structural unit (mass%) | 51 | 51 | 51 | 51 | 51 | 51 | - | - | 51 | 51 | 51 | 51 |
| | | | | | Weight-av-erage mo-lecular weight (Mw) | 86300 | 86300 | 86300 | 86300 | 86300 | 86300 | 56700 | 56700 | 86300 | 86300 | 86300 | 86300 |
| | | | | | Molecular weight distribution (Mw/Mn) | 1.03 | 1.03 | 1.03 | 1,03 | 1.03 | 1.03 | 1.03 | 1.03 | 1.03 | 1.03 | 1.03 | 1.03 |
| | | Antiblocking agent | | | Type | Zinc stea-rate | Zinc stea-rate | Alumini-um stear-ate | Zinc stea-rate | Zinc stea-rate | Zinc stea-rate | Zinc stea-rate | Zinc stea-rate | - | Zinc stea-rate | KAO WAX | KAO WAX |
| | | | | | Addi-tive amou nt (parts by mass) | 0.04 | 0.005 | 0.08 | 0.12 | 0.04 | 0.04 | 0.04 | 0.04 | 0 | 0.45 | 0.06 | 0.005 |
| | Type of shaped product | | | | | Resin sheet G1 | Resin sheet G2 | Resin sheet G3 | Resin sheet G4 | Resin sheet G1 | Resin sheet G 1 | Resin sheet G5 | Resin sheet G6 | - | Resin sheet G7 | G7 Resin sheet G8 | - |
| | Thickness of shaped product ($\mu$m) | | | | | 760 | 760 | 760 | 760 | 760 | 760 | 760 | 760 | - | 760 | 760 | - |

EP 3 604 436 A1

23

(continued)

| | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 |
|---|---|---|---|---|---|---|---|---|---|---|---|---|---|
| Adhesive layer | Type of adhesive sheet | - | - | - | - | L1 | L2 | - | - | - | - | - | - |
| | Thickness of adhesive layer ($\mu$m) | - | - | - | - | 50 | 50 | - | - | - | - | - | - |
| Evaluation | Blocking property | Good | Good | Good | Good | Good | Good | Good | Good | Poor | Good | Good | Poor |
| | Haze of shaped product (%) | 0.3 | 0.2 | 0.5 | 0.9 | 0.5 | 0.5 | 0.4 | 0.3 | Not shapeble | 1.2 | 1.2 | Not shapeable |
| | Evaluation of clouding of shaped product | Good | Good | Good | Good | Good | Good | Good | Good | | Poor | Poor | |
| | Sound Insulation property | - | - | - | - | Good | Good | - | - | - | - | - | - |

In Examples 1 to 8, the resin composition [M] obtained by externally adding a predetermined amount of a metal salt of a fatty acid with a carbon number of 10 to 30 as an antiblocking agent to 100 parts by mass of the pellets containing the hydrogenated block copolymer [D1] as a main component had favorable pellet blocking resistance, and the clouding of the shaped product formed by melt shaping was little. Particularly in Examples 1 to 3 and 5 to 8, the clouding was little.

In Example 5, the laminated glass produced by stacking the resin sheets [G] as a shaped product formed by melt shaping the resin composition [M], with an adhesive layer interposed therebetween, had favorable sound insulation property.

In Comparative Example 1, pellet blocking occurred easily without external addition of an antiblocking agent.

In Comparative Example 2, the resin composition [M] with a large external additive amount of an antiblocking agent had favorable pellet blocking resistance, but the clouding performance of the shaped product formed by melt shaping was poor.

In Comparative Examples 3 and 4, with the resin composition [M] having ethylene bisstearamide externally added thereto as an antiblocking agent, even if the external additive amount was appropriate, pellet blocking occurred easily, and/or the clouding performance of the shaped product formed by melt shaping was poor.

INDUSTRIAL APPLICABILITY

It is therefore possible to provide a resin composition with which pellet blocking resistance can be sufficiently improved and a shaped product having excellent transparency with little clouding can be obtained, and a shaped product having excellent transparency with little clouding and a production method therefor.

**Claims**

1. A resin composition comprising:

   pellets containing a hydrogenated block copolymer [D] as a main component, the hydrogenated block copolymer [D] being obtained by hydrogenating a block copolymer [C] having two or more polymer blocks [A] containing a structural unit derived from an aromatic vinyl compound as a main component and one or more polymer blocks [B] containing a structural unit derived from a chain conjugated diene compound as a main component; and
   an antiblocking agent formed from a metal salt of a fatty acid with a carbon number of 10 to 30,
   wherein a ratio wA:wB between wA and wB is 10:90 to 70:30, where wA is a mass fraction of a total amount of the polymer blocks [A] to the whole block copolymer [C] and wB is a mass fraction of a total amount of the polymer blocks [B] to the whole block copolymer [C], and
   a content of the antiblocking agent per 100 parts by mass of the pellets is 0.001 parts by mass or more and 0.4 parts by mass or less.

2. The resin composition according to claim 1, wherein in the hydrogenated block copolymer [D], 90 % or more of an unsaturated carbon-carbon bond in a main chain and a side chain is hydrogenated, and 90 % or more of an unsaturated carbon-carbon bond in an aromatic ring is hydrogenated.

3. The resin composition according to claim 1 or 2, wherein the fatty acid with a carbon number of 10 or more and 30 or less is at least one selected from the group consisting of stearic acid, lauric acid, myristic acid, ricinoleic acid, behenic acid, montanic acid, and 12-hydroxystearic acid.

4. The resin composition according to any one of claims 1 to 3, wherein the metal salt of the fatty acid with a carbon number of 10 or more and 30 or less is at least one selected from the group consisting of lithium stearate, sodium stearate, potassium stearate, magnesium stearate, calcium stearate, aluminum stearate, zinc stearate, barium stearate, calcium laurate, zinc laurate, barium laurate, zinc myristate, calcium ricinoleate, zinc ricinoleate, barium ricinoleate, zinc behenate, sodium montanate, magnesium 12-hydroxystearate, calcium 12-hydroxystearate, and zinc 12-hydroxystearate.

5. The resin composition according to any one of claims 1 to 4, further comprising
   an alkoxysilyl group-containing hydrogenated block copolymer obtained by introducing an alkoxysilyl group into the hydrogenated block copolymer [D].

6. A shaped product formed from the resin composition according to any one of claims 1 to 5,
   wherein a haze of the shaped product is 1.0 % or less.

**7.** A shaped product production method for producing the shaped product according to claim 6.

**8.** A resin sheet comprising
at least one resin layer formed from the resin composition according to any one of claims 1 to 5.

**9.** A laminated glass comprising
at least one the resin sheet according to claim 8.

## INTERNATIONAL SEARCH REPORT

| | International application No. |
|---|---|
| | PCT/JP2018/009556 |

**A. CLASSIFICATION OF SUBJECT MATTER**
Int.Cl. C08L53/02(2006.01)i, C03C27/12(2006.01)i, C08K5/098(2006.01)i

According to International Patent Classification (IPC) or to both national classification and IPC

**B. FIELDS SEARCHED**

Minimum documentation searched (classification system followed by classification symbols)
Int.Cl. C08L, C03C27/12, C08K5/098, C08F293-297

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2014-193940 A (ASAHI KASEI CHEMICALS CORPORATION) 09 October 2014, claims, paragraphs [0041], [0043], [0055], [0056], [0059], [0080] (Family: none) | 1, 3, 4, 8 |
| X | JP 2011-240676 A (KURARAY CO., LTD.) 01 December 2011, claims, paragraphs [0040], [0055]-[0058], [0081], example 12 (Family: none) | 1, 3, 6-9 |
| Y | | 2, 9 |
| X | JP 5-98051 A (ASAHI KASEI KOGYO CO., LTD.) 20 April 1993, claims, paragraphs [0013], [0017], [0020], examples (Family: none) | 1, 3, 4, 6-8 |
| Y | | 2, 9 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19.04.2018 | 12.06.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2018/009556

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2016/163409 A1 (ZEON CORPORATION) 13 October 2016, claims, examples<br>& CN 107406661 A | 9 |
| Y | WO 2015/115397 A1 (ZEON CORPORATION) 06 August 2015, claims, paragraphs [0024], [0049]<br>& EP 3101078 A1, claims, paragraphs [0032], [0058] & CN 106232754 A | 2 |
| A | JP 2007-308525 A (KURARAY CO., LTD.) 29 November 2007, claims, table 1<br>(Family: none) | 1-9 |
| A | JP 2011-236365 A (JSR CORPORATION) 24 November 2011, claims<br>(Family: none) | 1-9 |
| A | WO 2016/047321 A1 (TORAY ADVANCED FILM CO., LTD.) 31 March 2016, claims<br>& CN 106795374 A & KR 10-2017-0063508 A & TW 201615786 A | 1-9 |

Form PCT/ISA/210 (continuation of second sheet) (January 2015)

**EP 3 604 436 A1**

**Patent documents cited in the description**

- WO 2011096389 A1
- WO 2013176258 A1
- WO 2014091941 A1
- WO 2016104740 A1
- JP H598051 A
- JP 2007308525 A
- JP 2014034625 A
- JP 2015078090 A
- JP 2015151519 A
- WO 2012043708 A1